# EUROPEAN PATENT APPLICATION

(11) **EP 4 723 555 A1**
(43) Date of publication of application: **08.04.2026**
(21) Application number: 25206831.7
(22) Date of filing: 06.10.2025
(51) Int. Cl.: H04L 9/40

(54) **SYSTEMS, METHODS, AND MEDIA FOR GENERATING USER ALERTS**

(30) Priority: 03.10.2024 US 202418905940
(71) Applicant: Skyhigh Security LLC, Plano, TX 75024 (US)
(72) Inventor: Juniper, Andrew, Aylesbury, Bucks, HP21 7QW (GB); ltskos, Evangelos, Quainton, Buckinghamshire, HP22 4BT (GB)
(74) Representative: Samson & Partner Patentanwälte mbB

(57) **Abstract**

Mechanisms, including systems, methods, and media, for generating alerts are provided, the mechanisms including: receiving an application to be executed on a user device; injecting code into the application using a hardware processor; determining that network traffic violates a policy; and generating an alert message that indicates to the code that an alert is to be generated to a user. In some embodiments, the application is a web page that is to be executed by a browser on the user device. In some embodiments, the policy is a data loss prevention policy. In some embodiments, the mechanisms further include blocking the network traffic. In some embodiments, the mechanisms further include determining that the application is to have code injected into it based on a source or a classification of a source of the application.

## Description

### Background

Computer security mechanisms frequently block network traffic when a policy violation is triggered by the traffic. For example, with data loss prevention (DLP) mechanisms, network traffic may be blocked if the traffic includes confidential information that is not allowed to be sent outside of a given network. As another example, with anti-virus mechanism, network traffic may be blocked when a virus download is attempted.

To avoid user confusion, it is desirable to alert users that network traffic has been blocked so that the users do not wonder why systems with which they are interacting are not taking an appropriate action in response to network traffic that was intended to be received but was blocked. Also, alerting users that network traffic has been blocked may prevent the users from attempting to send the same and similar network traffic in the future.

When a computer security mechanism blocks network traffic originating from users' interaction with web page code, the web page code usually has no mechanism for generating an alert to the users when network traffic is blocked by an external mechanism. This means that the users might not be aware that the network traffic was blocked.

Accordingly, new mechanisms for generating user alerts are desirable.

### Summary

In accordance with some embodiments, mechanisms, including systems, methods, and media for generating user alerts are provided.

In some embodiments, systems for generating alerts are provided, the systems comprising: a memory; and at least one hardware processor that is coupled to the memory and that is collectively configured to at least: receive an application to be executed on a user device; inject code into the application; determine that network traffic violates a policy; and generate an alert message that indicates to the code that an alert is to be generated to a user. In some of these embodiments, the application is a web page that is to be executed by a browser on the user device. In some of these embodiments, the policy is a data loss prevention policy. In some of these embodiments, wherein the at least one hardware processor is further configured to block the network traffic. In some of these embodiments, wherein the at least one hardware processor is further configured to determine that the application is to have code injected into it based on a source or a classification of a source of the application. In some of these embodiments, the code is configured to select one of a plurality of ways of generating the alert based on one or more characteristics of the user device. In some of these embodiments, the alert message indicates how the code is to generate the alert.

In some embodiments, methods for generating alerts are provided, the methods comprising: receiving an application to be executed on a user device; injecting code into the application using a hardware processor; determining that network traffic violates a policy; and generating an alert message that indicates to the code that an alert is to be generated to a user. In some of these embodiments, the application is a web page that is to be executed by a browser on the user device. In some of these embodiments, the policy is a data loss prevention policy. In some of these embodiments, the methods further comprise blocking the network traffic. In some of these embodiments, the methods further comprise determining that the application is to have code injected into it based on a source or a classification of a source of the application. In some of these embodiments, the code is configured to select one of a plurality of ways of generating the alert based on one or more characteristics of the user device. In some of these embodiments, the alert message indicates how the code is to generate the alert.

In some embodiments, non-transitory computer-readable media containing computer executable instructions that, when executed by a processor, cause the processor to perform a method for generating alerts are provided, the method comprising: receiving an application to be executed on a user device; injecting code into the application; determining that network traffic violates a policy; and generating an alert message that indicates to the code that an alert is to be generated to a user. In some of these embodiments, the application is a web page that is to be executed by a browser on the user device. In some of these embodiments, the policy is a data loss prevention policy. In some of these embodiments, the method further comprises blocking the network traffic. In some of these embodiments, the method further comprises determining that the application is to have code injected into it based on a source or a classification of a source of the application. In some of these embodiments, the code is configured to select one of a plurality of ways of generating the alert based on one or more characteristics of the user device.

### Brief Description of the Drawings

FIG. 1 is an example block diagram of a system for generating user alerts in accordance with some embodiments
FIG. 2 is an example block diagram of hardware that can be used in components of the system of FIG. 1 in accordance with some embodiments
FIG. 3 is an example flow diagram of a process for generating user alerts in accordance with some embodiments

### Detailed Description

In accordance with some embodiments, mechanisms, including systems, methods, and media for generating user alerts are provided.

In some embodiments, these mechanisms inject code into a cloud app / web page when that cloud app / web page is requested, and then when policy violating traffic is detected, a message is sent to the injected code indicating that the network traffic has been blocked and/or that a policy has been violated, which then causes the injected code to generate an alert to the user.

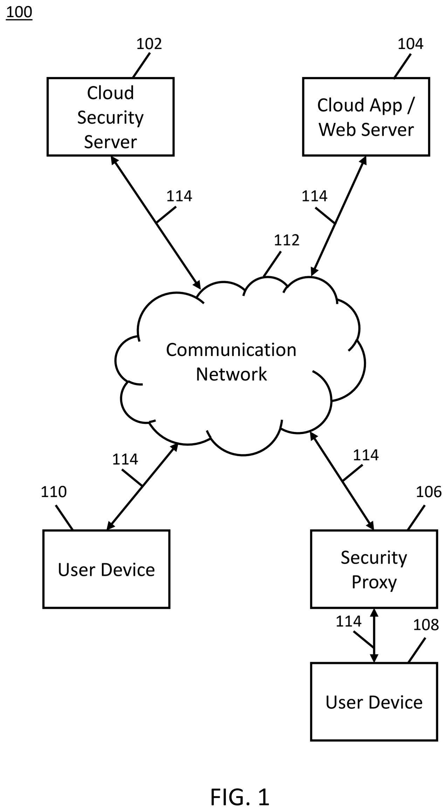

Turning to FIG. 1, an example 100 of a system for generating user alerts that can be used in accordance with some embodiments of the disclosed subject matter is shown. As illustrated, system 100 can include a cloud security server 102, a cloud app / web server 104, a security proxy 106, a user device 108, a user device 110, and a communication network 112.

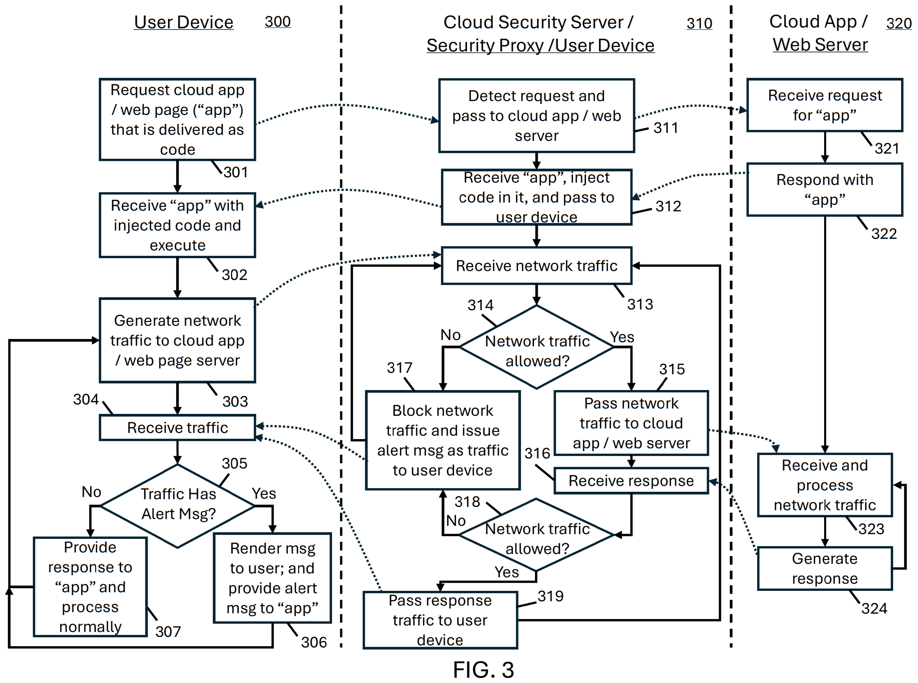

Cloud security server 102 can be any suitable server for performing security functions, including, but not limited to, the functions or part of the functions described below in connection with process 310 of FIG. 3.

Cloud app / web server 104 can be any suitable device that provides code to be provided to a user device. For example, server 104 can be a web server that provides code to be executed by a web browser on a user device as part of a web page. As another example, server 104 can be a server that provides a file sharing service or messaging application.

Security proxy 106 can be any suitable device that can act as a proxy for user device 108. In some embodiments, security proxy 106 can execute a process or part of a process (among other processes, in some embodiments) as described below in connection with process 310 of FIG. 3.

User devices 108 and 110 can be any suitable user devices, such as desktop computers, laptop computers, tablet computer, smart phones, and/or any other suitable computing devices, or any combination of the same, and can perform any suitable functions. In some embodiments, user devices 108 and 110 can execute a process or part of a process (among other processes, in some embodiments) as described below in connection with process 300 of FIG. 3. In some embodiments, user devices 108 and 110 can additionally or alternatively execute a process or part of a process (among other processes, in some embodiments) as described below in connection with process 310 of FIG. 3.

Communication network 112 can be any suitable combination of one or more wired and/or wireless networks in some embodiments. For example, in some embodiments, communication network 112 can include any one or more of the Internet, a mobile data network, a satellite network, a local area network, a wide area network, a telephone network, a cable television network, a WiFi network, a WiMax network, and/or any other suitable communication network.

Communication links 114 can be provided for connecting cloud security server 102, cloud app / web server 104, security proxy 106, user device 108, user device 110, and communication network 112 as shown in FIG. 1. The communication links can be any communication links suitable for communicating data, such as network links, dial-up links, wireless links, hard-wired links, any other suitable communication links, or any suitable combination of such links.

Although one cloud security server 102, one cloud app / web server 104, one security proxy 106, one user device 108, and one user device 110 are shown in FIG. 1 to avoid over-complicating the figure, any suitable numbers of these devices can be used in some embodiments. In some embodiments, user device 110 can be omitted. In some embodiments, user device 108 and security proxy 106 can be omitted. In some embodiments, cloud security server 102 can be omitted.

In some embodiments, two or more of cloud security server 102, cloud app / web server 104, security proxy 106, user device 108, and/or user device 110 can be combined into a single device.

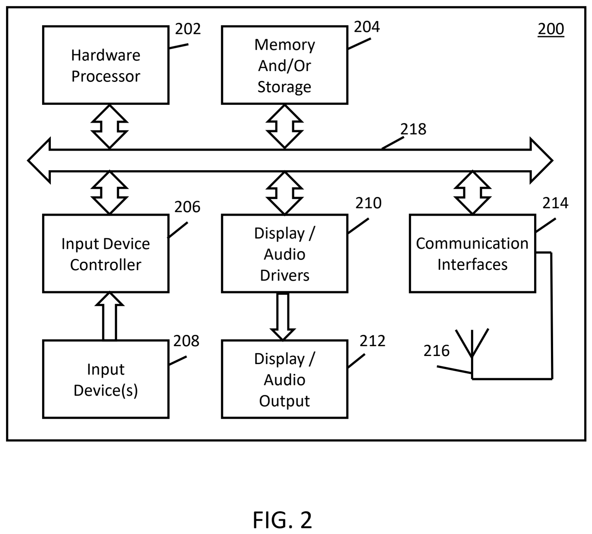

Cloud security server 102, cloud app / web server 104, security proxy 106, user device 108, and/or user device 110 can be implemented using any suitable hardware in some embodiments. For example, in some embodiments, cloud security server 102, remote device 104, security proxy 106, user device 108, and/or user device 110 can be implemented using any suitable general-purpose computer or special-purpose computer. For example, a security proxy can be implemented using a special-purpose computer. Any such general-purpose computer or special-purpose computer can include any suitable hardware. For example, as illustrated in example hardware 200 of FIG. 2, such hardware can include hardware processor 202, memory and/or storage 204, an input device controller 206, an input device 208, display/audio drivers 210, display and audio output circuitry 212, communication interface(s) 214, an antenna 216, and a bus 218.

Hardware processor 202 can include any suitable hardware processor, such as a microprocessor, a micro-controller, digital signal processor(s), dedicated logic, and/or any other suitable circuitry for controlling the functioning of a general-purpose computer or a special purpose computer in some embodiments. For example, in some embodiments, when process 310 of FIG. 3 is executing on a device including a hardware processor 202, the hardware processor can perform one or more of the functions described in connection with process 310 of FIG. 3.

Memory and/or storage 204 can be any suitable memory and/or storage for storing programs, data, and/or any other suitable information in some embodiments. For example, memory and/or storage 204 can include random access memory, read-only memory, flash memory, hard disk storage, optical media, and/or any other suitable memory.

Input device controller 206 can be any suitable circuitry for controlling and receiving input from input device(s) 208 in some embodiments. For example, input device controller 206 can be circuitry for receiving input from an input device 208, such as a touch screen, from one or more buttons, from a voice recognition circuit, from a microphone, from a camera, from an optical sensor, from an accelerometer, from a temperature sensor, from a near field sensor, and/or any other type of input device.

Display/audio drivers 210 can be any suitable circuitry for controlling and driving output to one or more display/audio output circuitries 212 in some embodiments. For example, display/audio drivers 210 can be circuitry for driving one or more display/audio output circuitries 212, such as an LCD display, a speaker, an LED, or any other type of output device.

Communication interface(s) 214 can be any suitable circuitry for interfacing with one or more communication networks, such as network 112 as shown in FIG. 1. For example, interface(s) 214 can include network interface card circuitry, wireless communication circuitry, and/or any other suitable type of communication network circuitry.

Antenna 216 can be any suitable one or more antennas for wirelessly communicating with a communication network in some embodiments. In some embodiments, antenna 216 can be omitted when not needed.

Bus 218 can be any suitable mechanism for communicating between two or more components 202, 204, 206, 210, and 214 in some embodiments.

Any other suitable components can additionally or alternatively be included in hardware 200 in accordance with some embodiments.

Turning to FIG. 3, an example of three processes for generating user alerts in accordance with some embodiments is illustrated. As shown in the figure, process 300 can be executed by one or more hardware processors running on a user device, such as user device 108, and/or user device 110. As also shown in the figure, process 310 can be executed by one or more hardware processors running on a cloud security server (such as cloud security server 102), a security proxy (such as security proxy 106), and/or a user device (such as user device 108, and/or user device 110). As further shown in the figure, process 320 can be executed by one or more hardware processors running on a cloud app / web server, such as cloud app / web server 104.

Interaction between processes 300, 310, and 320 is represented by dotted lines in FIG. 3. For example, as shown by the dotted arrow between blocks 301 and 311, in response to a request being generated at 301, the request is detected at 311.

As illustrated, process 300 begins at 301, where it generates a request for a cloud app / web page (hereinafter referred to as an "app") that is delivered at least partly as code. The app can be any suitable application, web page, or other mechanism that includes code. For example, in some embodiments, the app can be a web page that includes code to be executed by a browser. The request can be in any suitable format and have any suitable content, in some embodiments. For example, in some embodiments, the request can be a hypertext transfer protocol (HTTP) get request.

Process 310 next detects this request and passes the request to a cloud app / web page server, such as cloud app / web server 104 of FIG. 1, at 311. The request can be detected and passed in any suitable manner. For example, in some embodiments, the request can be detected by sniffing traffic on a network and passed by not blocking the request. As another example, the request can be detected by receiving the request and re-addressing the request and forwarding it to the cloud app / web page server. In some embodiments, the request generated at 301 can simply pass to cloud app / web page server and block 311 can be omitted.

At 321, process 320 can then receive the request for the app. Process 320 can receive the request in any suitable manner, in some embodiments.

Next, at 322, process 320 can respond with the requested app. This response can be generated in any suitable manner and have any suitable content in some embodiments. For example, in some embodiments, the response can be an HTTP response.

At 312, process 310 can receive the app, inject code into it, and pass the code-injected app to the user device. Process can receive the app, inject code into it, and pass the code-injected app to the user device in any suitable manner, in some embodiments. For example, in receiving the app, process 310 can receive the app in a response directed to the device running process 300 or can intercept a response containing the app that is directed to a user device, in some embodiments. As another example, in injecting the code into the app, process 310 can paste the injected code into the code of the app and/or can add a directive to the app that instructs the user device to retrieve the injected code from some source, in some embodiments. As yet another example, passing the code-injected app to the user device can be performed by generating an HTTP response that is configured to respond to the request at 301.

In some embodiments, the app received at 312 can include a "content security policy" (CSP). The CSP can indicate, for each type of content (e.g., code, fonts, style sheets, images etc.), what content is permitted to be used. In some embodiments, a browser will inhibit non-matching content from running. A CSP can identify permitted content as one or more of: nothing, everything (unrestricted and insecure), embedded content only, coming from nominated web addresses, having a certain fingerprint, having a certain magic number in its metadata, etc., in some embodiments. Some directives will invalidate other directives, in some embodiments. In some embodiments, multiple policies can be specified, with the resulting restrictions being the most secure combination. In some embodiments, at 312, process 310 can alter the way it injects and identifies the injected code in order to comply with the restrictions defined by a CSP, and sometimes it can also modify the restrictions requested in order to securely permit the injected code to run.

In some embodiments, prior to injecting code into the app, process 310 can first determine that the app is to have code injected into it. This determination can be made on any suitable basis, in some embodiments. For example, in some embodiments, this determination can be made based on a source or a classification (e.g., category, reputations, etc.) of a source of the app.

In some embodiments, the injected code modifies the default browser behavior used for sending content to and receiving content from a cloud service. For example, in some embodiments, the injected code overrides the browser method(s) for making an HTTP(S) request to a cloud service, and intercepts responses when they are returned to the app. When the injected code intercepts a response, it can detect markers in the response which indicate that a message is present and generate an alert for the message, in some embodiments. In some embodiments, the app making the request is unaware that the extra actions have been taken by the injected code.

Then, at 302, process 300 can receive the code-injected app and execute it. Process 300 can receive and execute the code-injected app in any suitable manner, in some embodiments. For example, in some embodiments, process 300 can receive the code-injected app in an HTTP response and execute it in a web browser.

Next, at 303 of process 300, the app can generate network traffic to be sent to the cloud app / web server. This network traffic can have any suitable content and be in any suitable format, in some embodiments. In some instances, the network traffic will be allowed by one or more policies, and in other instances, the network traffic will be not allowed by one or more policies.

At 313, process 310 can receive the network traffic. The network traffic can be received at 313 in any suitable manner, in some embodiments.

Then, at 314, process 310 can determine if the network traffic is allowed by one or more policies. This determination can be made in any suitable manner based on any suitable policies, in some embodiments. For example, in some embodiments, the network traffic can be determined to be not allowed based on the network traffic having content that violates a DLP, security, or other policy. As another example, in some embodiments, the network traffic can be determined to be allowed based on the network traffic having content that does not violate any DLP, security, or other policy.

If it is determined at 314 that the network traffic is allowed, then process 310 can branch to 315 at which it can pass the network traffic to the cloud app / web server. Process 310 can pass the network traffic to the cloud app / web server in any suitable manner, in some embodiments. For example, in some embodiments, process can pass the network traffic to the cloud app / web server as an HTTP message.

Then, process 320 can receive and process the network traffic at 323, and generate a response at 324. Receiving and processing the network traffic at 323, and generating a response at 324 can be performed in any suitable manner in some embodiments.

Next, at 316, process 310 can receive the response. Receiving the response can be performed in any suitable manner, in some embodiments.

Then, at 318, process 310 can determine whether the network traffic received at 316 is allowed. This determination can be made in any suitable manner based on any suitable policies, in some embodiments. For example, in some embodiments, the network traffic can be determined to be not allowed based on the network traffic having content that violates a DLP, security, or other policy. As another example, in some embodiments, the network traffic can be determined to be allowed based on the network traffic having content that does not violate any DLP, security, or other policy.

If it is determined at 318 that the network traffic is allowed, then process 310 can branch to 319 at which it can pass the network traffic to the user device. Process 310 can pass the network traffic to the user device in any suitable manner, in some embodiments.

Even though process 310 can pass network traffic to the user device at 319, in some embodiments, process 310 can additionally indicate that an alert message is to be presented to a user. For example, in some embodiments, such an alert message may indicate to a user that traffic sent from the user device violates or almost violates a policy, that the traffic is being monitored, and/or any other suitable message.

If it is determined at 314 or 318 that network traffic is not allowed, then process 310 can block the network traffic and issue an alert message to the user device at 317. The network traffic can be blocked in any suitable manner, in some embodiments. For example, the network traffic can be blocked by logging the network traffic's contents and deleting the corresponding network traffic packets. The alert message can be issued to the user device in any suitable manner, in some embodiments. For example, the alert message can be issued using a format, such as a header, that include content that will be detected by the injected code. As another example, the alert message can additionally or alternatively include content describing why the network traffic was not allowed (e.g., it can identify a policy that was violated).

Process 300 can then receive the network traffic (i.e., the response generated at 324 or the alert message issued at 317) at 304. Receiving the network traffic at 304 can be performed in any suitable manner, in some embodiments.

At 305, process 300, using the injected code, can then determine if the network traffic has an alert message. This determination can be made in any suitable manner, in some embodiments. For example, in some embodiments, the network traffic can be inspected for header content indicating that an alert message is present.

If it is determined at 305 that the network traffic received at 304 has an alert message, then, at 306, process 300 can render a message to the user and provide an alert message to the app. Rendering a message to the user and providing an alert message to the app can be performed in any suitable manner, in some embodiments. For example, rendering a message to the user can be performed by generating a message, such as a pop-up message, that indicated that the network traffic was blocked and why (e.g., that it violates a given policy), in some embodiments. As another example, providing an alert message to the app can be performed by generating any suitable message to the application indicating that the network traffic was not delivered, in some embodiments. In some embodiments, 305 can omit providing an alert message to the app.

In some embodiments, the alert message can indicate how the alert is to be generated. For example, in some embodiments, the alert message can indicate that the alert is to be generated in an iframe, as a pop-up, and/or in any other suitable manner. In some embodiments, the injected code can determine, based on characteristics of the user device, a best way to render the alert. For example, for a mobile phone, an alert may be generated differently than on a laptop.

In some embodiments, an alert can offer a user an option to respond to the message, for example to justify the action which triggered the message or to request further information from the operator of the network device.

If it is determined at 305 that the network traffic received at 304 does not have an alert message, then, at 307, process 300 can provide the response to the app, which can process it normally, in some embodiments. Providing the response to the app and processing it normally can be performed in any suitable manner, in some embodiments.

It should be understood that at least some of the above-described blocks of the process of FIG. 3 can be executed or performed in any order or sequence not limited to the order and sequence shown in and described in the figure. Also, some of the above blocks of the process of FIG. 3 can be executed or performed substantially simultaneously where appropriate or in parallel to reduce latency and processing times. Additionally or alternatively, some of the above described blocks of the process of FIG. 3 can be omitted.

In some embodiments, any suitable computer readable media can be used for storing instructions for performing the functions and/or processes described herein. For example, in some embodiments, computer readable media can be transitory or non-transitory. For example, non-transitory computer readable media can include media such as non-transitory magnetic media (such as hard disks, floppy disks, and/or any other suitable magnetic media), non-transitory optical media (such as compact discs, digital video discs, Blu-ray discs, and/or any other suitable optical media), non-transitory semiconductor media (such as flash memory, electrically programmable read-only memory (EPROM), electrically erasable programmable read-only memory (EEPROM), and/or any other suitable semiconductor media), any suitable media that is not fleeting or devoid of any semblance of permanence during transmission, and/or any suitable tangible media. As another example, transitory computer readable media can include signals on networks, in wires, conductors, optical fibers, circuits, any suitable media that is fleeting and devoid of any semblance of permanence during transmission, and/or any suitable intangible media.

Accordingly, mechanisms, including systems, methods, and media, for generating user alerts are provided, in some embodiments. Using these mechanisms, users can be alerted to issues (such as policy violations) that might otherwise not be detected, in some embodiments.

Although the invention has been described and illustrated in the foregoing illustrative embodiments, it is understood that the present disclosure has been made only by way of example, and that numerous changes in the details of implementation of the invention can be made without departing from the spirit and scope of the invention, which is limited only by the claims that follow. Features of the disclosed embodiments can be combined and rearranged in various ways.

## Claims

1. A system for generating alerts, comprising:
a memory; and
at least one hardware processor that is coupled to the memory and that is collectively configured to at least:
receive an application to be executed on a user device;
inject code into the application;
determine that network traffic violates a policy; and
generate an alert message that indicates to the code that an alert is to be generated to a user.

2. The system of claim 1, wherein the application is a web page that is to be executed by a browser on the user device.

3. The system of claim 1, wherein the policy is a data loss prevention policy.

4. The system of claim 1, wherein the at least one hardware processor is further configured to block the network traffic.

5. The system of claim 1, wherein the at least one hardware processor is further configured to determine that the application is to have code injected into it based on a source or a classification of a source of the application.

6. The system of claim 1, wherein the code is configured to select one of a plurality of ways of generating the alert based on one or more characteristics of the user device.

7. The system of claim 1, wherein the alert message indicates how the code is to generate the alert.

8. A method for generating alerts, comprising:
receiving an application to be executed on a user device;
injecting code into the application using a hardware processor;
determining that network traffic violates a policy; and
generating an alert message that indicates to the code that an alert is to be generated to a user.

9. The method of claim 8, wherein the application is a web page that is to be executed by a browser on the user device.

10. The method of claim 8, wherein the policy is a data loss prevention policy.

11. The method of claim 8, further comprising blocking the network traffic.

12. The method of claim 8, further comprising determining that the application is to have code injected into it based on a source or a classification of a source of the application.

13. The method of claim 8, wherein the code is configured to select one of a plurality of ways of generating the alert based on one or more characteristics of the user device.

14. The method of claim 8, wherein the alert message indicates how the code is to generate the alert.

15. A non-transitory computer-readable medium containing computer executable instructions that, when executed by a processor, cause the processor to perform a method for generating alerts, the method comprising
receiving an application to be executed on a user device;
injecting code into the application;
determining that network traffic violates a policy; and
generating an alert message that indicates to the code that an alert is to be generated to a user.

16. The non-transitory computer-readable medium of claim 15, wherein the application is a web page that is to be executed by a browser on the user device.

17. The non-transitory computer-readable medium d of claim 15, wherein the policy is a data loss prevention policy.

18. The non-transitory computer-readable medium of claim 15, further comprising blocking the network traffic.

19. The non-transitory computer-readable medium of claim 15, further comprising determining that the application is to have code injected into it based on a source or a classification of a source of the application.

20. The non-transitory computer-readable medium of claim 15, wherein the code is configured to select one of a plurality of ways of generating the alert based on one or more characteristics of the user device.
